# EUROPEAN PATENT SPECIFICATION

(11) **EP 3 779 807 B1**
(45) Date of publication and mention of the grant of the patent: **23.04.2025**
(21) Application number: 19191478.7
(22) Date of filing: 13.08.2019
(51) Int. Cl.: G06N 5/02

(54) **ADAPTIVE RULE EVALUATION SYSTEM AS WELL AS METHOD FOR AUTOMATICALLY ADAPTING A RULE EVALUATION**
ADAPTIVES REGELBEWERTUNGSSYSTEM SOWIE VERFAHREN ZUR AUTOMATISCHEN ANPASSUNG EINER REGELBEWERTUNG
SYSTÈME D'ÉVALUATION ADAPTATIVE DE RÈGLE AINSI QUE PROCÉDÉ POUR ADAPTER AUTOMATIQUEMENT UNE ÉVALUATION DE RÈGLE

(43) Date of publication of application: 17.02.2021
(73) Proprietor: Rohde & Schwarz GmbH & Co. KG, 81671 München (DE)
(72) Inventor: Finsterbusch, Michael, 81671 München (DE)
(74) Representative: Novagraaf Group

(56) References cited:
- EP-B1- 1 006 701

## Description

The invention is defined in the appended independent claims. Preferred embodiments are described by the dependent claims.

In the state of the art, rule evaluation systems are known that apply at least one (matching) rule on input data in order to identify whether or not a certain criterion is met by the input data, particularly by a characteristic of the input data, resulting in a match of the respective rule. Typically, a rule is assigned to several criteria that are taken into account in order to identify whether or not the input data matches the respective rule or vice versa.

Furthermore, the rule evaluation system may apply different rules on the input data in order to identify if at least a certain rule of the several rules matches, particularly if all rules match. As each of the several rules are applied in a certain order and each rule comprises at least one criterion, the respective criteria assigned to the several rules are also applied on the input data in a certain order. Put differently, a certain criterion is checked first, another criterion is checked afterwards and so on.

The respective order in which the criteria or rather the rules are evaluated is fixed, which results in a varying performance of the rule evaluation system in case of time variant input data having changing characteristics assigned to the criteria of the rules applied.

EP 1 006 701 B1 shows an adaptive rule evaluation system that applies several rules with only a single criterion on the received data in a sequential manner. The order of the rules can be adapted such that rules which match the received data less frequently are applied later, but only in case the previous one did not reveal a rule hit.

Accordingly, there is a need for a rule evaluation system as well as a method having improved performance properties while evaluating time variant input data.

The invention provides an adaptive rule evaluation system as defined in claim 1.

Further, the invention provides a method for automatically adapting a rule evaluation with respect to time variant input data as defined in claim 10.

The invention is based on the finding that time variant input data can be processed in an improved manner while adjusting the rule processing with respect to the time variant input data, particularly the time variant characteristic(s) of the input data. This adjustment or rather adaption of the rule processing might relate to the order in which criteria of the rule(s) are evaluated, as the respective order is not fixed, but flexible, namely adaptable. Depending on the profiling of the rule processing, the information might be obtained that it would be better for the overall performance of the rule evaluation to evaluate a certain criterion firstly and another one lastly. Put differently, the profiling of the rule processing might reveal that the order of the criteria and/or the rule(s) applied shall be varied or rather adapted in order to improve the performance of the rule evaluation.

Generally, more than one rule, namely several rules, may be applied on the time variant input data.

Furthermore, a single rule may comprise more than one criterion, namely several criteria.

Accordingly, several criteria may be applied on the time variant input data. The several criteria may be assigned to a single rule or to more than one rule, namely several rules.

Further, more than one characteristic of the input data, namely several characteristics, may be checked by the rule evaluation, particularly the method and/or the rule evaluation system.

Hence, the rule processing corresponds to applying the at least one criterion, particularly the several criteria, on the time variant input data in order to evaluate whether or not the at least one criterion, particularly the several criteria, are matched by the time variant input data, namely its characteristic(s) being time variant.

As mentioned above, the rule processing, namely the order in which the criteria are evaluated, is profiled and evaluated by means of the evaluation processing module in order identify an optimization potential of the rule processing. After the profiling, namely the evaluation of the current rule processing, it is possible to adapt the rule processing with respect to the characteristic(s) of the input data, which change(s) over time, namely the time variant input data. Thus, the adjusted rule processing, also called adapted rule processing, might be obtained.

In fact, the rule processing is done by means of the rule match processing module when the at least one rule is applied on the time variant input data. Thus, the rule processing inter alia relates to the order of the criteria or rather rule(s) applied. Put differently, the rule processing inter alia relates to the order of the criteria being checked with respect to a matching.

Thus, the order of the criteria is determined by means of the evaluation processing module and, further, the order of the criteria determined may also be evaluated by means of the evaluation processing module in order identify the optimization potential of the rule processing.

Accordingly, it is possible to identify an optimal order of the criteria used for evaluation of the time variant input data, as the optimal order depends on the time variant input data, the at least one rule applied and/or its at least one criterion. Put differently, the adaptive rule evaluation system takes all information available into account, namely the time variant input data, particularly its characteristic(s), the at least one rule applied on the time variant input data as well as its at least one criterion. While doing so, the adaptive rule evaluation system is enabled to adapt the rule processing, namely the order of rules and/or criteria applied on the time variant input data, in order to improve the overall performance of the rule evaluation system.

The rule evaluation system is adaptive, as the order of criteria applied is not fixed, but can be adapted automatically by the rule evaluation system in an adaptive manner.

An aspect provides that the adjustment processing module is configured to forward the adjusted rule processing to the rule match processing module in order to be applied on the time variant input data. Thus, the adjusted rule processing is applied on the time variant input data. Hence, the adjusted rule processing previously determined by means of the adjustment processing module is used by the rule match processing module in order to evaluate the time variant input data with respect to the adjusted rule processing, namely the adapted one.

For instance, the adjusted rule processing relates to an optimized rule processing. The rule processing is optimized with respect to its performance, as certain criteria may be evaluated firstly in order to directly identify whether or not a dedicated rule is hit by the time variant input data.

Generally, such criteria are evaluated at the beginning of the rule processing that can reduce the number of criteria to be checked next in order to reduce the overall efforts. This, however, inter alia depends on the time variant input data itself, particularly its characteristic(s).

The rule match processing module is configured to identify a rule hit when all criteria of the at least one rule applied match. Hence, a rule hit is identified when all criteria of the at least one rule applied match. Thus, a single rule may comprise several criteria, which are applied on the time variant input data, wherein a matching rule or rather a rule hit is only identified in case of all criteria matching the input data or vice versa. As mentioned above, each single rule may comprise only one criterion, resulting in several criteria assigned to several (different) rules.

Put differently, the rule processing may be assigned to several criteria applied that, however, may be assigned to a single rule or rather several (different) rules, namely at least one rule.

Particularly, the evaluation processing module is configured to profile the rule processing after identifying a rule hit. Thus, the rule processing is profiled after a rule hit was identified. Accordingly, the rule processing is only determined and evaluated in case of an existing rule hit identified previously.

Further, the evaluation processing module may be configured to profile the rule processing continuously. Hence, the rule processing is profiled continuously. Thus, a continuous evaluation of the rule processing, particularly its impact on the rule processing, is ensured, resulting in an improved performance of the rule evaluation system.

In addition, the adjustment processing module may be configured to determine the adjusted rule processing at least one of continuously, on demand and at runtime. Hence, the adjusted rule processing is determined at least one of continuously, on demand and at runtime. Put differently, the adjusted rule processing is determined continuously, on demand and/or at runtime. This may be selected by a user of the rule evaluation system whether or not the adjusted rule processing is determined continuously or on demand.

Hence, the output of the evaluation processing module is always forwarded to the adjustment processing module. However, the adjustment processing module may selectively, for instance on demand, determine the adjusted rule processing based on the data received from the evaluation processing module, namely its output.

According to an aspect, the evaluation processing module is connected to the rule match processing module. Alternatively or additionally, the adjustment processing module is connected to the evaluation processing module. Alternatively or additionally, the adjustment processing module is connected to the rule match processing module. Thus, the different modules may be separately formed and interconnected with each other (via data lines) in order to exchange the respective data gathered and obtained by means of processing the gathered data.

According to another aspect, the rule match processing module, the evaluation processing module and the adjustment processing module are established by a single module. Thus, all modules of the adaptive rule evaluation system are established by a single module, namely a common module. Thus, the respective output data of the rule match processing module, the evaluation processing module and/or the adjustment processing module is exchanged internally.

Further, the rule match processing module, the evaluation processing module and/or the adjustment processing module are established on a common chip. Accordingly, the entire adaptive rule evaluation system may be established on a common chip, as the respective modules of the rule evaluation system are established on the common chip. Thus, a cost-efficient arrangement of the rule evaluation system is provided.

In general, the method for automatically adapting the rule evaluation with respect to time variant input data may be performed by the adaptive rule evaluation system.

Moreover, the method for automatically adapting the rule evaluation with respect to time variant input data may use the adaptive rule evaluation system described above.

Further characteristics and advantages of the claimed subject matter will be apparent from the following description as well as the accompanying drawings, to which reference is made. In the drawings:
- Figure 1 schematically shows an adaptive rule evaluation system according to the invention, and
- Figure 2 shows a flow-chart of a method for automatically adapting a rule evaluation with respect to time variant input data according to the invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

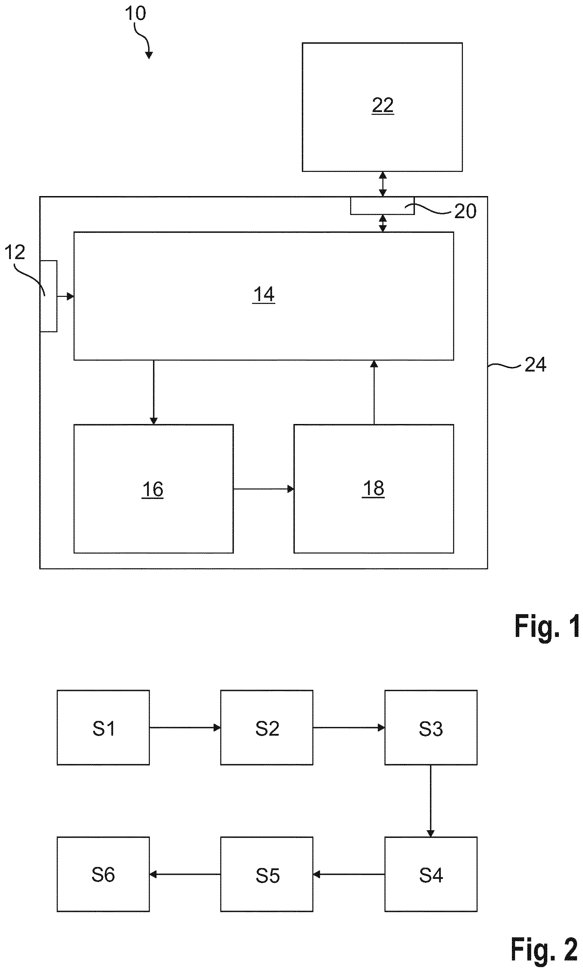

In Figure 1, an adaptive rule evaluation system 10 is shown that comprises an input 12 for receiving time variant input data, for instance data streams.

The rule evaluation system 10 further comprises a rule match processing module 14 that is assigned to the input 12. Further, the rule evaluation system 10 comprises an evaluation processing module 16 that is connected with the rule match processing module 14. The evaluation processing module 16 is further connected to an adjustment processing module 18, which in turn is connected with the rule match processing module 14.

In fact, data is exchanged between the modules 14 to 18 in series, which means that the evaluation processing module 16 gathers data from the rule match processing module 14, wherein the evaluation processing module 16 processes the respective data gathered and forwards output data to the adjustment processing module 18, which in turn processes the data gathered from the evaluation processing module 16 in order to forward output data towards the rule match processing module 14.

As also shown in Figure 1, the adaptive rule evaluation system 10 further comprises a rule input 20 via which defined rules are provided for the rule match processing module 14. Accordingly, the rule match processing module 14 is assigned to the rule input 20.

The rule input 20 may be assigned to a data storage 22 in which defined rules as well as criteria of the respective rules are stored. The rule match processing module 14 may access the storage 22. Alternatively, the defined rules are forwarded to the rule match processing module 14 automatically.

The respective rules may also be stored within the rule match processing module 14 itself.

In the shown embodiment, the different modules 14 to 18 are established by separate modules, as the respective modules 14 to 18 are interconnected with each other, for instance via respective data lines.

However, the modules 14 to 18 may also be established by a single module.

Irrespective thereof, the respective modules 14 to 18 may be established on a common chip 24, as shown in Figure 1. In fact, the entire adaptive rule evaluation system 10 may be established on the common chip 24.

The adaptive rule evaluation system 10 is generally configured to automatically adapt a rule evaluation with respect to time variant input data as will be described hereinafter with reference to Figure 2.

In a first step S1, time variant input data is received via the input 12, which is forwarded to the rule match processing module 14.

In a second step S2, the rule match processing module 14 processes the time variant input data by means of applying at least one rule on the time variant input data. The at least one rule applied on the time variant input data may relate to one of the defined rules that the rule match processing module 14 receives from the storage 22 via the rule input 20. As mentioned above, the respective rule(s) may also be stored within the rule match processing module 14 itself.

Generally, the at least one rule comprises at least one criterion that is assigned to a characteristic of the time variant input data, which is time variant. Put differently, the characteristic(s) of the time variant input data are evaluated by the respective rule applied, particularly the criteria assigned thereto, in order to identify a rule hit or rather a matching criterion.

In a third step S3, the rule processing done by means of the rule match processing module 14 is profiled by means of the evaluation processing module 16. The rule processing relates to applying the at least one rule on the time variant input data, particularly the several criteria assigned to the at least one rule.

The profiling relates to a measuring and evaluation of the rule(s) and/or criteria that are applied on the time variant input data. In fact, the evaluation processing module 16 identifies/determines the order of the criteria applied on the time variant input data. This order identified/determined is further evaluated in order to verify whether or not an optimization potential is present with respect to the overall performance of the rule evaluation system 10.

In a fourth step S4, an adjusted rule processing is determined by the adjustment processing module 18 that receives the profile data (output data) of the evaluation processing module 16.

The adjusted rule processing determined by the adjustment processing module 18 relates to an optimized rule processing. This means that an optimized order of the criteria applied on the time variant input data is determined in order to improve the performance of the rule evaluation system 10.

In a fifth step S5, the adjusted rule processing is forwarded to the rule match processing module 14 by means of the adjustment processing module 18. Hence, the rule match processing module 14 receives the adjusted rule processing, namely the optimized one.

In a sixth step S6, the rule match processing module 14 applies the adjusted rule processing on the time variant input data in order to improve the performance of the rule evaluation system 10. Put differently, the order of the criteria applied on the time variant input data is changed due to the adjusted rule processing or rather adapted rule processing.

In fact, the rule processing does not correspond to a fixed order of the criteria applied, as the order is adjusted by the rule evaluation system 10 in an adaptive manner, which inter alia depends on the input data itself, particularly its characteristic(s). Hence, the rule evaluation system 10 is an adaptive one.

Besides the input data itself, the adaption may depend on the rule(s) and/or criteria applied.

In general, the rule match processing module 14 identifies a rule hit when all criteria of the at least one rule applied match with the input data or rather vice versa. This means that a rule hit or rather a rule match takes place in case of all criteria assigned to the at least one rule applied are fulfilled by the characteristics of the time variant input data.

According to a certain embodiment, the evaluation processing module 16 may only profile the rule processing after a rule hit has been identified previously by the rule match processing module 14. This ensures that the rule processing is only adapted or rather optimized in case of a rule hit.

Generally, the rule processing may be profiled continuously by the evaluation processing module 16 so that continuous determination and evaluation of the order of the criteria applied is ensured.

Further, the adjustment processing module 18 may receive the output data of the evaluation processing module 16, namely the evaluation data, continuously so as to determine the adjusted rule processing in a continuous manner. However, the adjustment processing module 18 may also determine the adjusted rule processing only on demand and/or at runtime.

In an embodiment according to the invention, defined rules relate to finding malicious network traffic sent to databases. A certain rule may check the IP addresses, TCP ports and patterns in content. The IP addresses, TCP ports and patterns correspond to the characteristics of the input data, wherein the input data relates to the traffic data.

The criteria assigned to the IP addresses and TCP ports will always match for any kind of database traffic, but not for other traffic such as HTTP, mails and so on.

Accordingly, if the rule is only used to observe a subnet with the databases, the criteria assigned to the IP addresses and TCP ports will always match and, thus, a lot of checks are done that are superfluous. Therefore, the overall performance could be improved by first checking the criterion assigned to the pattern such that it is verified at the beginning whether or not the data traffic shows a certain pattern. If this check is positive, the other criteria might be check.

This ensures that the relevant criterion is checked at the beginning in order to avoid checking all criteria in case that the decisive one is the last one to be checked with respect to the specific input data and/or the rule applied on the specific input data.

However, if the rule mentioned above is not used to only observe a subnet with the databases, but the entire network, it makes sense to adapt the rule processing, namely the order of the criteria applied, in order to improve the overall performance.

Thus, the same rule may be used in different ways, as the rule processing is adapted by means of the adaptive rule evaluation system 10.

This is only one example, as the input data to be evaluated may also relate to e-mail content or any other kind of data such that the respective characteristics to be checked by applying certain criteria may be different. In fact, the inventive concept may be applied to different kinds of data to be processed.

In general, an improved rule evaluation system 10 is provided with regard to processing time variant input data, as the order of the criteria applied on the time variant input data is adapted with respect to the time variant input data itself, the rule(s) applied as well as the criteria assigned to the at least one rule applied.

## Claims

1. An adaptive rule evaluation system (10) for finding malicious network traffic sent to databases, comprising:
- an input (12) for receiving time variant input data, wherein the time variant input data is network traffic;
- a rule match processing module (14);
- an evaluation processing module (16); and
- an adjustment processing module (18);
wherein the rule match processing module (14) is configured to process the time variant input data by means of applying several rules on the time variant input data, wherein the several rules relate to finding the malicious network traffic and comprise several criteria assigned to characteristics of the time variant input data, wherein the characteristics are time variant, wherein the rule match processing module (14) is configured to apply the several criteria on the time variant input data, wherein the rule match processing module (14) is configured to identify a rule hit when all criteria of the rule applied match,
wherein the evaluation processing module (16) is configured to profile and evaluate the rule processing that relates to the order of the criteria being checked with respect to a matching, thereby identifying an optimization potential of the rule processing and an optimal order of the criteria used for evaluation of the time variant input data, as the optimal order depends on the time variant input data, the rules applied and their criteria, and
wherein the adjustment processing module (18) is configured to determine an adjusted rule processing, thereby ensuring that a decisive criterion of a respective rule is checked at the beginning in order to avoid checking all criteria of the rule in case that the decisive criterion is the last one to be checked with respect to the input data and the respective rule applied on the input data.

2. The adaptive rule evaluation system (10) according to claim 1, wherein the adjustment processing module (18) is configured to forward the adjusted rule processing to the rule match processing module (14) in order to be applied on the time variant input data.

3. The adaptive rule evaluation system (10) according to claim 1 or 2, wherein the adjusted rule processing relates to an optimized rule processing.

4. The adaptive rule evaluation system (10) according to any of the preceding claims, wherein the evaluation processing module (16) is configured to profile the rule processing after identifying a rule hit.

5. The adaptive rule evaluation system (10) according to any of the preceding claims, wherein the evaluation processing module (16) is configured to profile the rule processing continuously.

6. The adaptive rule evaluation system (10) according to any of the preceding claims, wherein the adjustment processing module (18) is configured to determine the adjusted rule processing at least one of continuously, on demand and at runtime.

7. The adaptive rule evaluation system (10) according to any of the preceding claims, wherein the evaluation processing module (16) is connected to the rule match processing (14) module and/or wherein the adjustment processing module (18) is connected to the evaluation processing module (16) and/or wherein the adjustment processing module (18) is connected to the rule match processing module (14).

8. The adaptive rule evaluation system (10) according to any of claims 1 to 6, wherein the rule match processing module (14), the evaluation processing module (16) and the adjustment processing module (18) are established by a single module.

9. The adaptive rule evaluation system (10) according to any of the preceding claims, wherein the rule match processing module (14), the evaluation processing module (16) and/or the adjustment processing module (18) are established on a common chip (24).

10. A method of automatically adapting a rule evaluation with respect to time variant input data for finding malicious network traffic sent to databases, the method comprising the following steps:
- Receiving time variant input data via an input (12), wherein the time variant input data is network traffic;
- Processing the time variant input data by means of applying several rules on the time variant input data by a rule match processing module (14), wherein the several rules relate to finding the malicious network traffic and comprise several criteria assigned to characteristics of the time variant input data, wherein the characteristics are time variant, wherein the several criteria are applied on the time variant input data by the rule match processing module (14), wherein a rule hit is identified by the rule match processing module (14) when all criteria of the rule applied match;
- Profiling and evaluating the rule processing by an evaluation processing module (16), wherein the rule processing relates to the order of the criteria being checked with respect to a matching, thereby identifying an optimization potential of the rule processing and an optimal order of the criteria used for evaluation of the time variant input data, as the optimal order depends on the time variant input data, the rules applied and their criteria; and
- Determining an adjusted rule processing by an adjustment processing module (18), thereby ensuring that a decisive criterion of a respective rule is checked at the beginning in order to avoid checking all criteria of the rule in case that the decisive criterion is the last one to be checked with respect to the input data and the respective rule applied on the input data.

11. The method of claim 10, wherein the adjusted rule processing is applied on the time variant input data.

12. The method of claim 10 or 11, wherein the rule processing is profiled after a rule hit was identified.

13. The method of any of claims 10 to 12, wherein the rule processing is profiled continuously and/or wherein the adjusted rule processing is determined at least one of continuously, on demand and at runtime.

## Patentansprüche

1. Adaptives Regelauswertungssystem (10) zum Auffinden von bösartigem Netzwerkverkehr, der an Datenbanken gesendet wird, umfassend:
- einen Eingang (12) zum Empfangen zeitvarianter Eingangsdaten, wobei die zeitvarianten Eingangsdaten Netzwerkverkehr sind;
- ein Regelübereinstimmungsverarbeitungsmodul (14);
- ein Auswertungsverarbeitungsmodul (16); und
- ein Anpassungsverarbeitungsmodul (18);
wobei das Regelübereinstimmungsverarbeitungsmodul (14) konfiguriert ist, um die zeitvarianten Eingabedaten mittels Anwenden mehrerer Regeln auf die zeitvarianten Eingabedaten zu verarbeiten, wobei sich die mehreren Regeln auf das Auffinden des bösartigen Netzwerkverkehrs beziehen und mehrere Kriterien umfassen, die Merkmalen der zeitvarianten Eingabedaten zugewiesen sind, wobei die Merkmale zeitvariant sind, wobei das Regelübereinstimmungsverarbeitungsmodul (14) konfiguriert ist, um die mehreren Kriterien auf die zeitvarianten Eingabedaten anzuwenden, wobei das Regelübereinstimmungsverarbeitungsmodul (14) konfiguriert ist, um einen Regeltreffer zu identifizieren, wenn alle Kriterien der angewendeten Regel übereinstimmen,
wobei das Auswertungsverarbeitungsmodul (16) konfiguriert ist, um die Regelverarbeitung zu profilieren und auszuwerten, die sich auf die Reihenfolge der Kriterien bezieht, die hinsichtlich einer Übereinstimmung geprüft werden, wobei dadurch ein Optimierungspotenzial der Regelverarbeitung und eine optimale Reihenfolge der Kriterien identifiziert werden, die für eine Auswertung der zeitvarianten Eingabedaten verwendet werden, da die optimale Reihenfolge von den zeitvarianten Eingabedaten, den angewandten Regeln und ihren Kriterien abhängt, und
wobei das Anpassungsverarbeitungsmodul (18) konfiguriert ist, um eine angepasste Regelverarbeitung zu bestimmen, wobei dadurch sichergestellt wird, dass ein entscheidendes Kriterium einer jeweiligen Regel zu Beginn geprüft wird, um das Prüfen aller Kriterien der Regel zu vermeiden, für den Fall, dass das entscheidende Kriterium das letzte ist, das hinsichtlich der Eingabedaten und der jeweiligen Regel geprüft wird, die auf die Eingabedaten angewendet wird.

2. Adaptives Regelauswertungssystem (10) nach Anspruch 1, wobei das Anpassungsverarbeitungsmodul (18) konfiguriert ist, um die angepasste Regelverarbeitung an das Regelübereinstimmungsverarbeitungsmodul (14) weiterzuleiten, um sie auf die zeitvarianten Eingabedaten anzuwenden.

3. Adaptives Regelauswertungssystem (10) nach Anspruch 1 oder 2, wobei sich die angepasste Regelverarbeitung auf eine optimierte Regelverarbeitung bezieht.

4. Adaptives Regelauswertungssystem (10) nach einem der vorstehenden Ansprüche, wobei das Auswertungsverarbeitungsmodul (16) konfiguriert ist, um die Regelverarbeitung nach dem Identifizieren eines Regeltreffers zu profilieren.

5. Adaptives Regelauswertungssystem (10) nach einem der vorstehenden Ansprüche, wobei das Auswertungsverarbeitungsmodul (16) konfiguriert ist, um die Regelverarbeitung kontinuierlich zu profilieren.

6. Adaptives Regelauswertungssystem (10) nach einem der vorstehenden Ansprüche, wobei das Anpassungsverarbeitungsmodul (18) konfiguriert ist, um die angepasste Regelverarbeitung kontinuierlich, auf Anforderung und zu einer Laufzeit zu bestimmen.

7. Adaptives Regelauswertungssystem (10) nach einem der vorstehenden Ansprüche, wobei das Auswertungsverarbeitungsmodul (16) mit dem Regelübereinstimmungsverarbeitungs(14)-Modul verbunden ist und/oder wobei das Anpassungsverarbeitungsmodul (18) mit dem Auswertungsverarbeitungsmodul (16) verbunden ist und/oder wobei das Anpassungsverarbeitungsmodul (18) mit dem Regelübereinstimmungsverarbeitungsmodul (14) verbunden ist.

8. Adaptives Regelauswertungssystem (10) nach einem der Ansprüche 1 bis 6, wobei das Regelübereinstimmungsverarbeitungsmodul (14), das Auswertungsverarbeitungsmodul (16) und das Anpassungsverarbeitungsmodul (18) durch ein einziges Modul eingerichtet sind.

9. Adaptives Regelauswertungssystem (10) nach einem der vorstehenden Ansprüche, wobei das Regelübereinstimmungsverarbeitungsmodul (14), das Auswertungsverarbeitungsmodul (16) und/oder das Anpassungsverarbeitungsmodul (18) auf einem gemeinsamen Chip (24) eingerichtet sind.

10. Verfahren zum automatischen Anpassen einer Regelauswertung hinsichtlich zeitvarianter Eingabedaten zum Auffinden von bösartigem Netzwerkverkehr, der an Datenbanken gesendet wird, das Verfahren umfassend die folgenden Schritte:
- Empfangen zeitvarianter Eingabedaten über einen Eingang (12), wobei die zeitvarianten Eingabedaten Netzwerkverkehr sind;
- Verarbeiten der zeitvarianten Eingabedaten mittels Anwenden mehrerer Regeln auf die zeitvarianten Eingabedaten durch ein Regelübereinstimmungsverarbeitungsmodul (14), wobei sich die mehreren Regeln auf das Auffinden des bösartigen Netzwerkverkehrs beziehen und mehrere Kriterien umfassen, die Eigenschaften der zeitvarianten Eingabedaten zugewiesen sind, wobei die Eigenschaften zeitvariant sind, wobei die mehreren Kriterien durch das Regelübereinstimmungsverarbeitungsmodul (14) auf die zeitvarianten Eingabedaten angewendet werden, wobei ein Regeltreffer durch das Regelübereinstimmungsverarbeitungsmodul (14) identifiziert wird, wenn alle Kriterien der angewendeten Regel übereinstimmen;
- Profilieren und Auswerten der Regelverarbeitung durch ein Auswertungsverarbeitungsmodul (16), wobei sich die Regelverarbeitung auf die Reihenfolge der Kriterien bezieht, die hinsichtlich einer Übereinstimmung geprüft werden, wobei dadurch ein Optimierungspotenzial der Regelverarbeitung und eine optimale Reihenfolge der Kriterien identifiziert werden, die für die Auswertung der zeitvarianten Eingangsdaten verwendet werden, da die optimale Reihenfolge von den zeitvarianten Eingangsdaten, den angewandten Regeln und deren Kriterien abhängt, und
- Bestimmen einer angepassten Regelverarbeitung durch ein Anpassungsverarbeitungsmodul (18), wobei dadurch sichergestellt wird, dass ein entscheidendes Kriterium einer jeweiligen Regel zu Beginn geprüft wird, um zu vermeiden, dass alle Kriterien der Regel geprüft werden, für den Fall, dass das entscheidende Kriterium das letzte ist, das hinsichtlich der Eingabedaten und der jeweiligen Regel geprüft wird, die auf die Eingabedaten angewendet wird.

11. Verfahren nach Anspruch 10, wobei die angepasste Regelverarbeitung auf die zeitvarianten Eingabedaten angewendet wird.

12. Verfahren nach Anspruch 10 oder 11, wobei die Regelverarbeitung profiliert wird, nachdem ein Regeltreffer identifiziert wurde.

13. Verfahren nach einem der Ansprüche 10 bis 12, wobei die Regelverarbeitung kontinuierlich profiliert wird und/oder wobei die angepasste Regelverarbeitung mindestens eines von kontinuierlich, auf Anforderung und zu der Laufzeit bestimmt wird.

## Revendications

1. Système adaptatif d'évaluation de règles (10) permettant de détecter un trafic réseau malveillant envoyé à des bases de données, comprenant :
- une entrée (12) permettant de recevoir des données d'entrée variables dans le temps, dans lequel les données d'entrée variables dans le temps représentent un trafic réseau ;
- un module de traitement de correspondances de règles (14) ;
- un module de traitement d'évaluation (16) ; et
- un module de traitement d'ajustement (18) ;
dans lequel le module de traitement de correspondances de règles (14) est configuré pour traiter les données d'entrée variables dans le temps au moyen de l'application de multiples règles aux données d'entrée variables dans le temps, dans lequel les multiples règles se rapportent à la détection du trafic réseau malveillant et comprennent de multiples critères attribués à des caractéristiques des données d'entrée variables dans le temps, dans lequel les caractéristiques sont variables dans le temps, dans lequel le module de traitement de correspondances de règles (14) est configuré pour appliquer les multiples critères aux données d'entrée variables dans le temps, dans lequel le module de traitement de correspondances de règles (14) est configuré pour identifier un résultat positif pour une règle lorsque tous les critères de la règle appliquée correspondent,
dans lequel le module de traitement d'évaluation (16) est configuré pour profiler et évaluer le traitement des règles qui se rapporte à l'ordre des critères vérifiés par rapport à une correspondance, identifiant de ce fait un potentiel d'optimisation du traitement des règles et un ordre optimal des critères utilisés pour l'évaluation des données d'entrée variables dans le temps, étant donné que l'ordre optimal dépend des données d'entrée variables dans le temps, des règles appliquées et de leurs critères, et
dans lequel le module de traitement d'ajustement (18) est configuré pour déterminer un traitement ajusté des règles, garantissant de ce fait qu'un critère décisif d'une règle donnée est vérifié au début afin d'éviter de vérifier tous les critères de la règle dans le cas où le critère décisif est le dernier à être vérifié en ce qui concerne les données d'entrée et la règle donnée appliquée aux données d'entrée.

2. Système adaptatif d'évaluation de règles (10) selon la revendication 1, dans lequel le module de traitement d'ajustement (18) est configuré pour transmettre le traitement ajusté des règles au module de traitement de correspondances de règles (14) afin qu'il soit appliqué aux données d'entrée variables dans le temps.

3. Système adaptatif d'évaluation de règles (10) selon la revendication 1 ou 2, dans lequel le traitement ajusté des règles se rapporte à un traitement optimisé des règles.

4. Système adaptatif d'évaluation de règles (10) selon l'une quelconque des revendications précédentes, dans lequel le module de traitement d'évaluation (16) est configuré pour profiler le traitement des règles après l'identification d'un résultat positif pour une règle.

5. Système adaptatif d'évaluation de règles (10) selon l'une quelconque des revendications précédentes, dans lequel le module de traitement de l'évaluation (16) est configuré pour profiler le traitement des règles en continu.

6. Système adaptatif d'évaluation de règles (10) selon l'une quelconque des revendications précédentes, dans lequel le module de traitement d'ajustement (18) est configuré pour déterminer le traitement ajusté des règles selon au moins l'une parmi les modalités suivantes : en continu, à la demande et au moment de l'exécution.

7. Système adaptatif d'évaluation de règles (10) selon l'une quelconque des revendications précédentes, dans lequel le module de traitement d'évaluation (16) est connecté au module de traitement de correspondances de règles (14) et/ou dans lequel le module de traitement d'ajustement (18) est connecté au module de traitement d'évaluation (16) et/ou dans lequel le module de traitement d'ajustement (18) est connecté au module de traitement de correspondances de règles (14).

8. Système adaptatif d'évaluation de règles (10) selon l'une quelconque des revendications 1 à 6, dans lequel le module de traitement de correspondances de règles (14), le module de traitement d'évaluation (16) et le module de traitement d'ajustement (18) sont mis en place par un seul module.

9. Système adaptatif d'évaluation de règles (10) selon l'une quelconque des revendications précédentes, dans lequel le module de traitement de correspondances de règles (14), le module de traitement d'évaluation (16) et/ou le module de traitement d'ajustement (18) sont mis en place sur une puce commune (24).

10. Procédé d'adaptation automatique d'une évaluation de règles par rapport à des données d'entrée variables dans le temps afin de détecter un trafic réseau malveillant envoyé à des bases de données, le procédé comprenant les étapes suivantes :
- recevoir des données d'entrée variables dans le temps par l'intermédiaire d'une entrée (12), dans lequel les données d'entrée variables dans le temps sont du trafic réseau ;
- traiter les données d'entrée variables dans le temps au moyen de l'application de multiples règles aux données d'entrée variables dans le temps par un module de traitement de correspondance de règles (14), dans lequel les multiples règles se rapportent à la détection du trafic réseau malveillant et comprennent de multiples critères attribués à des caractéristiques des données d'entrée variables dans le temps, dans lequel les caractéristiques sont variables dans le temps, dans lequel les multiples critères sont appliqués aux données d'entrée variables dans le temps par le module de traitement de correspondance de règles (14), dans lequel un résultat positif pour une règle est identifié par le module de traitement de correspondance de règles (14) lorsque tous les critères de la règle appliquée correspondent ;
- profiler et évaluer le traitement des règles par un module de traitement d'évaluation (16), dans lequel le traitement des règles se rapporte à l'ordre des critères vérifiés par rapport à une correspondance, identifiant de ce fait un potentiel d'optimisation du traitement des règles et un ordre optimal des critères utilisés pour l'évaluation des données d'entrée variables dans le temps, étant donné que l'ordre optimal dépend des données d'entrée variables dans le temps, des règles appliquées et de leurs critères ; et
- déterminer un traitement ajusté des règles au moyen d'un module de traitement d'ajustement (18), garantissant de ce fait qu'un critère décisif d'une règle donnée est vérifié au début afin d'éviter de vérifier tous les critères de la règle dans le cas où le critère décisif est le dernier à être vérifié en ce qui concerne les données d'entrée et la règle donnée appliquée aux données d'entrée.

11. Procédé selon la revendication 10, dans lequel le traitement ajusté des règles est appliqué aux données d'entrée variables dans le temps.

12. Procédé selon la revendication 10 ou 11, dans lequel le traitement des règles est profilé après qu'un résultat positif pour une règle a été identifié.

13. Procédé selon l'une quelconque des revendications 10 à 12, dans lequel le traitement des règles est profilé en continu et/ou dans lequel le traitement ajusté des règles est déterminé selon au moins l'une parmi les modalités suivantes : en continu, à la demande et au moment de l'exécution.
